# FASCICULE DE BREVET EUROPEEN

(11) **EP 0 821 641 B1**
(45) Date de publication et mention de la délivrance du brevet: **02.08.2000**
(21) Numéro de dépôt: 96913595.3
(22) Date de dépôt: 16.04.1996
(51) Int. Cl.: B29C 33/30, B29C 49/48

(54) **DISPOSITIF POUR FABRIQUER DES RECIPIENTS EN UNE MATIERE THERMOPLASTIQUE PAR SOUFFLAGE OU ETIRAGE-SOUFFLAGE**
VORRICHTUNG ZUR HERSTELLUNG VON KUNSTSTOFF-BEHÄLTERN DURCH BLASFORMEN ODER STRECKBLASFORMEN
DEVICE FOR PRODUCING THERMOPLASTIC CONTAINERS BY A BLOW-MOULDING OR STRETCH BLOW-MOULDING PROCESS

(30) Priorité: 19.04.1995 FR 9504651
(43) Date de publication de la demande: 04.02.1998
(73) Titulaire: SIDEL, F- 76053 Le Havre Cedex (FR)
(72) Inventeur: BRIERE, Dominique, F-76600 Le Havre (FR); COISY, Léon, F-76290 Saint-Martin-du-Manoir (FR); LA BARRE, Paul, F-76310 Sainte-Adresse (FR); SANTAIS, Pascal, F-76620 Le Havre (FR)
(74) Mandataire: Gorree, Jean-Michel
(86) Numéro de dépôt international: FR9600576
(87) Numéro de publication internationale: WO9633059

(56) Documents cités:
- DE-C- 3 613 543
- DE-C- 3 934 495
- FR-A- 2 613 979
- FR-A- 2 646 802
- US-A- 3 871 611
- US-A- 5 262 116
- MODERN PLASTICS INTERNATIONAL, vol. 21, no. 8, 1 Août 1991, pages 30-31, XP000231921 TOENSMEIER P A: "QUICK-CHANGE SYSTEMS ADD TO BLOW MOLDERS' MARKET REACH"
- PATENT ABSTRACTS OF JAPAN vol. 012, no. 286 (M-727), 5 Août 1988 & JP,A,63 062710 (RIICHI OKADA;OTHERS: 01), 19 Mars 1988,

## Description

La présente invention concerne des perfectionnements apportés aux dispositifs permettant de fabriquer des récipients, notamment des bouteilles, en une matière thermoplastique par soufflage ou étirage-soufflage d'une préforme préalablement chauffée, ledit dispositif comportant au moins un moule constitué de deux demi-moules supportés par respectivement deux portes-moules mobiles l'un par rapport à l'autre.

Il est courant que les demi-moules soient fixés aux porte-moules respectifs de façon amovible de manière que lesdits demi-moules puissent être remplacés ou échangés en cas d'endommagement et/ou d'usure et surtout en cas de fabrication de récipients de formes et/ou de dimensions différentes, sans qu'il soit nécessaire de remplacer l'ensemble du dispositif de moulage.

Toutefois, un tel agencement est encore loin de satisfaire totalement les utilisateurs. En effet, chaque demi-moule est lourd (par exemple de l'ordre de 25 à 30 kg pour un moule en acier) : les moyens de fixation doivent être en mesure de supporter ce poids et comprennent des boulonnages et/ou vissages nombreux ; en outre, la manipulation de chaque demi-moule doit être effectuée par plusieurs personnes et/ou à l'aide d'un palan, ce qui nécessite une installation appropriée au-dessus du dispositif de fabrication. Chaque demi-moule est équipé de moyens de circulation d'un ou plusieurs fluides pour le refroidissement et/ou le chauffage des parois de l'empreinte : le remplacement de chaque demi-moule s'accompagne du démontage, puis du remontage des raccordements fluidiques correspondants, toutes opérations qui nécessitent du temps.

Il faut également ajouter une considération d'ordre économique portant sur la constitution même de chaque demi-moule. L'empreinte servant au moulage sous pression du récipient définitif doit présenter un état de surface parfaitement poli, sur lequel, en outre, la matière thermoplastique chaude ne doit pas adhérer : il est donc nécessaire que l'empreinte soit constituée en un matériau métallique approprié (par exemple acier inoxydable), qui peut du reste différer selon la matière thermoplastique employée. Compte tenu de la structure monobloc du demi-moule, c'est alors la totalité de chaque demi-moule qui doit être constituée en ce matériau métallique approprié, matériau noble et donc coûteux, alors que la partie arrière des demi-moules n'a à assurer qu'une fonction de résistance mécanique conférant la rigidité et l'indéformabilité du moule pour laquelle un matériau moins noble, et donc moins coûteux pourrait parfaitement convenir.

L'invention a donc essentiellement pour but de remédier, dans toute la mesure du possible, aux inconvénients des dispositifs de fabrication actuellement connus, et de proposer un dispositif perfectionné qui permette un changement rapide et simple des empreintes de moulage pour faciliter l'adaptation du dispositif à des fabrications de récipients divers, et dont la structure perfectionnée soit finalement moins coûteuse que celle des dispositifs actuels tout en conservant les mêmes qualités de résistance et d'indéformabilité.

A ces fins, un dispositif de fabrication de récipients en matière thermoplastique tel que mentionné au préambule et connu du document FR-A-2 646 802 se caractérise essentiellement, étant agencé conformément à l'invention, en ce que chaque demi-moule comprend un porte-coquille supporté par le porte-moule respectif et une coquille munie d'une demi-empreinte du récipient à obtenir et solidarisable de façon amovible à son porte-coquille par des moyens de fixation rapide, la coquille et le porte-coquille étant conformés de façon complémentaire pour être en contact mutuel au moins partiel avec conduction thermique tandis que les conduits et raccordements de circulation de fluides de refroidissement et/ou de chauffage, et éventuellement les organes de guidage des demi-moules pour la fermeture du moule, ainsi que les moyens de compensation de pression pour maintenir la fermeture étanche du moule au cours du soufflage, sont prévus exclusivement dans le porte-coquille.

Grâce à cet agencement, on désolidarise la partie du demi-moule correspondant à l'empreinte, qui peut être économiquement réalisée en un matériau approprié et relativement coûteux, et la partie arrière du demi-moule, qui assure la rigidité et la résistance mécanique et qui peut être réalisée en un matériau moins noble et moins coûteux (par exemple en alliage d'aluminium ordinaire). De plus, étant moins lourde, cette partie arrière présente une inertie moindre, ce qui contribue à faciliter les mouvements de rotation des demi-moules. De plus et surtout, le changement de l'empreinte pour la fabrication de récipients de formes diverses ne nécessite que l'échange de la coquille qui est d'un poids bien inférieur (par exemple de l'ordre de 10 kg) à celui du demi-moule complet et qui est donc manipulable à bras d'homme : l'installation de manutention (qui reste toutefois nécessaire pour traiter d'autres pièces, et notamment les porte-coquilles, du dispositif) peut cependant être simplifiée, et surtout la procédure de remplacement des coquilles est rendue plus rapide. Elle est en outre rendue d'autant plus rapide qu'il n'y a plus à démonter, puis à remonter les raccords fluidiques qui demeurent en permanence connectés aux porte-coquilles.

On peut aussi prévoir une standardisation des porte-coquilles qui sont, d'origine, équipés d'un ensemble de conduits fluidiques parmi lesquels on sélectionne ceux utiles pour une fabrication donnée avec une empreinte donnée. Ainsi il est possible de créer des circuits indépendants permettant de réaliser, dans chaque porte-coquille et donc dans la coquille, des zones avec des réglages de température différenciés. Il en résulte, là encore, une possibilité de réduction du coût de fabrication des porte-coquilles qui accompagne leur production standardisée en plus grand nombre.

De préférence, les faces coopérantes mutuellement en contact de la coquille et du porte-coquille sont sensiblement semi-cylindriques de révolution avec un axe sensiblement parallèle à l'axe de l'empreinte du récipient à fabriquer ; il est ainsi plus facile de réaliser des faces coopérantes en contact mutuel qui assurent un transfert thermique aussi voisin que possible de celui d'une structure monobloc, ce qui peut en outre être obtenu en prévoyant que la coquille et le porte-coquille soient en contact total de conduction thermique. Toutefois il faut noter ici que l'agencement conforme à l'invention offre aussi la possibilité de faire en sorte, lorsque cela s'avère souhaitable, que la coquille et le porte-coquille soient en contact partiel de conduction thermique réservant des zones de limitation de la conduction thermique, ce qui constitue encore un autre moyen de créer, au niveau de la paroi de l'empreinte, des zones à réglages de température différenciés.

Il est souhaitable, pour permettre un assemblage rapide, et donc facile, de la coquille sur le porte-coquille tout en ayant un positionnement relatif précis des coquilles l'une par rapport à l'autre, que les faces coopérantes mutuellement en contact avec conduction thermique de la coquille et du porte-coquille soient pourvues de moyens de positionnement mutuel axial ; de préférence lesdits moyens de positionnement mutuel axial comprennent un système de nervure(s) et gorge(s) coopérantes s'étendant circonférentiellement, ce qui, en combinaison avec la configuration précitée en demi-cylindre desdites faces coopérantes de la coquille et du porte-coquille, permet un assemblage très simple, avec un positionnement très précis de la coquille, en ayant recours à des moyens de fixation simplifiés.

Ainsi, avantageusement, les moyens de fixation rapide de la coquille sur le porte-coquille sont prévus sur leurs faces de joint respectives. Dans le cas de faces coopérantes en demi-cylindre, lesdits moyens de fixation sont situés sur les bords respectifs de la coquille et de la demi-coquille qui sont parallèles à l'axe de l'empreinte ; il est alors souhaitable que les moyens de fixation rapide comprennent, d'un côté, au moins une butée de positionnement de la face de joint de la coquille par rapport à la face de joint du porte-coquille et, de l'autre côté, des moyens de vissage rapide sur la face de joint du porte-coquille avec surface de serrage débordant sur la face de joint de la coquille, ce grâce à quoi la mise en place et le blocage de la coquille sur le porte-coquille sont obtenus par glissement curviligne de la coquille, guidée par le système nervure(s)/gorge(s), dans le berceau constitué par le porte-coquille. En particulier, dans le cas où les porte-moules sont articulés en rotation l'un par rapport à l'autre pour constituer un moule de type "portefeuille", on prévoit, pour simplifier le montage et le démontage, que la susdite butée est située du côté de l'articulation des porte-moules et les moyens de vissage rapide sont situés du côté opposé.

Pour fixer les idées, on peut indiquer que, dans un dispositif de moulage typique agencé conformément à l'invention, le temps de remplacement d'une paire de coquilles est de l'ordre de 8 mn, alors que le temps de remplacement d'une paire de demi-moules dans un dispositif antérieur est de l'ordre de 20 mn avec mise en oeuvre d'un matériel de manutention approprié.

L'invention sera mieux comprise à la lecture de la description détaillée qui suit d'un mode de réalisation préféré donné uniquement à titre d'exemple illustratif. Dans cette description, on se réfère aux dessins annexés sur lesquels :
- la figure 1 est une vue schématique de dessus d'une partie d'un dispositif de moulage agencé conformément à l'invention ;
- la figure 2 est une vue de face d'un demi-moule en deux pièces du dispositif de la figure 1 ; et
- la figure 3 est une vue de dessous d'un demi-moule de la figure 2.

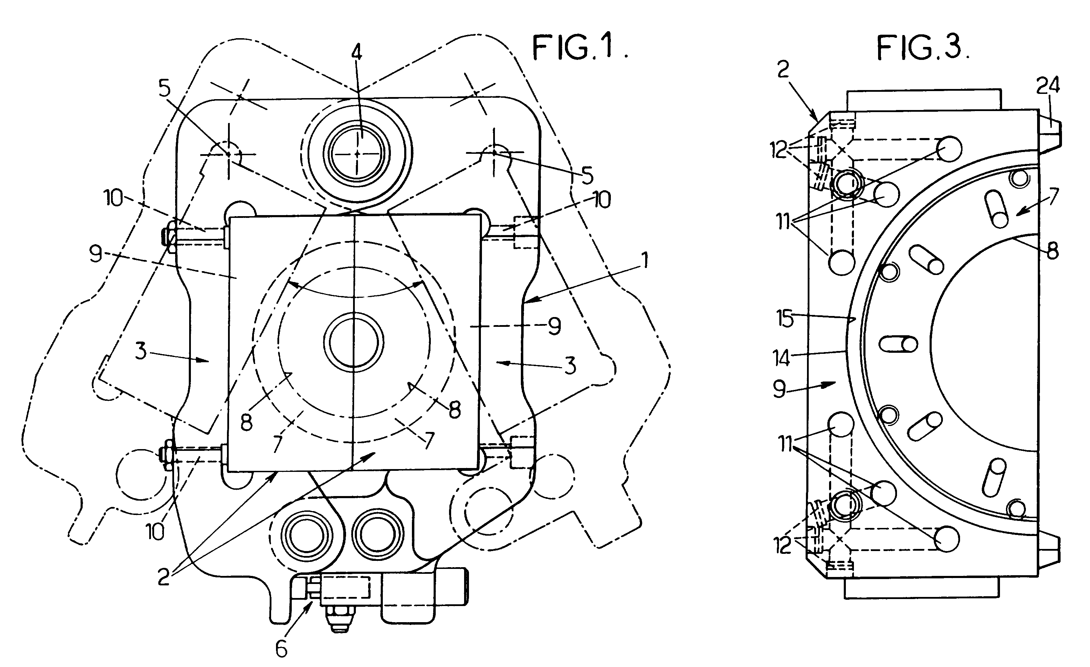

En se référant tout d'abord à la figure 1, il y est représentée une partie d'un dispositif de fabrication de récipients, notamment de bouteilles, constitués en une matière thermoplastique telle que le polyéthylènetérephtalate PET, le polyéthylèneaphtalate PEN ou autre, ainsi que leurs alliages ou mélanges, par soufflage ou étirage-soufflage d'une préforme prélablement chauffée.

Ce dispositif comporte au moins un moule 1 constitué de deux demi-moules 2 supportés respectivement par deux porte-moules 3 mobiles l'un par rapport à l'autre. Dans l'exemple représenté, les deux porte-moules 3 sont constitués sous forme de deux structures enveloppantes montées à pivotement sur un axe commun de rotation 4 de telle manière que les deux demi-moules puissent s'écarter l'un de l'autre en pivotant (structure dite "portefeuille"). L'entraînement des portes-moules à l'ouverture et à la fermeture peut être assuré, de façon classique, par un système de bras de traction articulés en 5 sur les porte-moules respectifs à distance de l'axe 4 de ceux-ci.

Des moyens de verrouillage, désignés dans leur ensemble par 6, assurent le verrouillage des deux demi-moules en position de fermeture et de moulage.

Conformément à l'invention chaque demi-moule est constitué sous forme de deux sous-ensembles, savoir une coquille 7 munie d'une demie empreinte 8 du récipient à fabriquer et un porte-coquille 9 qui supporte la coquille 7 et qui est lui-même solidarisé au porte-moule correspondant 2.

On peut considérer que chaque porte-coquille 9 correspond extérieurement, en forme et en dimensions, au porte-moule des structures antérieures et il peut donc être solidarisé au porte-moule respectif 3 de la même manière, par exemple par boulonnage 10, les perçages et taraudages pouvant être en nombre et en disposition identiques à ceux des agencements antérieurs.

Comme visible à la figure 3, chaque porte-coquille est muni des conduits intérieurs 11 et des raccords 12 nécessaires à la circulation d'au moins un fluide de refroidissement ou de chauffage de la paroi de l'empreinte. Ces conduits et raccords peuvent être prévus en nombre quelconque et être par exemple indépendants les uns des autres de manière à laisser ensuite toute latitude, par leur raccordement extérieur approprié, pour constituer des circuits de configurations diverses et/ou indépendantes selon le type de récipients à réaliser et le type de matériau employé. Il est ainsi possible de standardiser dans une certaine mesure la fabrication des porte-coquilles 9 et d'en réduire le prix de revient.

Du fait que l'empreinte 8 est physiquement séparée du porte-coquille 9, on peut réaliser celui-ci en un matériau moins noble, par exemple en alliage d'aluminium ordinaire même lorsque la coquille est réalisée en acier, ce qui permet, là encore, d'économiser sur son coût ; de plus le porte-coquille 9 ainsi réalisé est moins lourd qu'un porte-coquille en acier, ce qui diminue de façon souhaitable son inertie et influe favorablement sur le fonctionnement dynamique du moule.

Chaque coquille 7 présente une demi-empreinte 8 du récipient final creusée dans sa face de joint 13. La face externe 14 de chaque coquille 7 a la forme générale d'un demi-cylindre de révolution dont l'axe est sensiblement parallèle à l'axe de l'empreinte 8 du récipient ; en pratique, l'empreinte est coaxiale au demi-cylindre. La coquille 7 repose dans un berceau 15 de forme complémentaire évidé dans le porte coquille 9. Les formes de la coquille et du porte coquille sont parfaitement adaptées et leur contact est aussi étroit que possible. On peut ainsi prévoir que les faces coopérantes 14 et 15 de la coquille 7 et du porte-coquille 9 soient en totalité en contact de conduction thermique, de sorte que le transfert thermique de l'une à l'autre soit aussi bon que possible et se rapproche au mieux de celui-ci d'un demi-moule monobloc.

Toutefois, il est également envisageable que lesdites faces coopérantes 14 et 15 ne soient que partiellement en contact de conduction thermique, avec réservation de zones de limitation de la conduction thermique ; on est ainsi en mesure de réaliser des réglages de température différenciés au niveau de la paroi de l'empreinte. Pour que l'empreinte 8 présente la finission polie requise et que le matériau thermoplastique chaud n'adhère pas à sa surface, les coquilles sont réalisées en un matériau approprié, par exemple en acier inoxydable. La conservation d'une adéquation parfaite des formes des parties coopérantes du porte-coquille 9 et de la coquille 7 nécessite le choix de matériaux qui présentent des coefficients de dilation thermique sensiblement identiques.

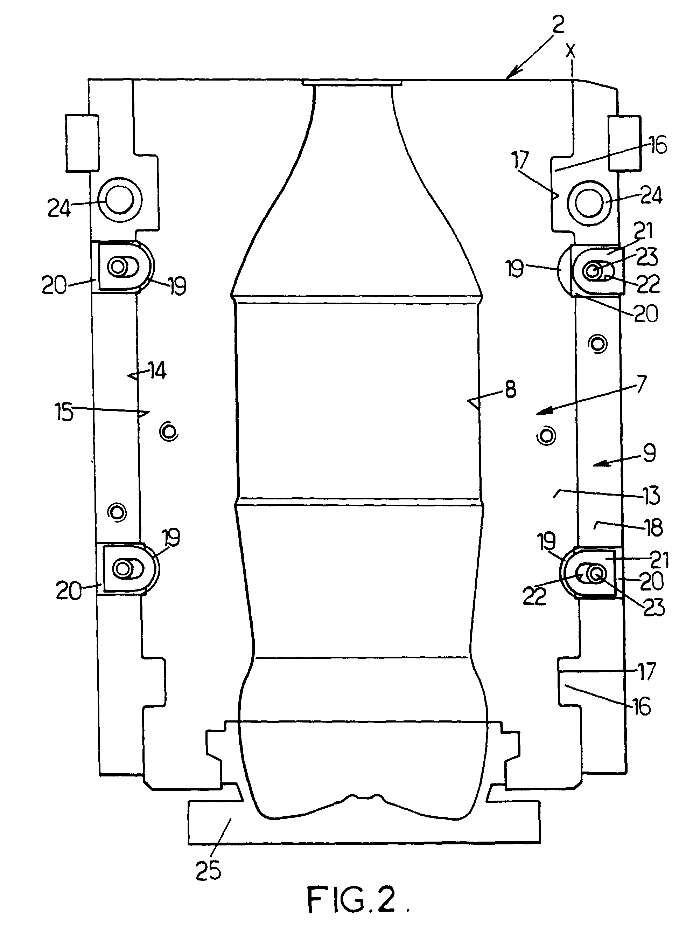

Dans l'exemple représenté à la figure 2, le récipient à produire possède un fond de forme complexe (fond pétaloïde) et les impératifs de démoulage du récipient après sa formation conduisent à prévoir un fond de moule 25 séparé, distinct des demi-moules 2, qui comporte l'empreinte du fond du récipient. On notera ici que la figure 3 est une vue de dessous du demi-moule de la figure 2, le fond de moule 25 n'étant pas représenté.

Le positionnement mutuel axial du porte-coquille 9 et de la coquille 7 est obtenu par un ensemble d'éléments coopérants nervure(s)/gorge(s) emboîtés l'un dans l'autre. Comme montré à la figure 3, la coquille 7 est munie de deux gorges 17 creusées circonférentiellement dans sa face externe 14, à distance axiale l'une de l'autre ; de même la face en berceau 15 du porte-coquille 9 présente deux nervures 18 s'emboîtant sans jeu dans les deux gorges 17 respectives. Une fois la coquille 7 disposée dans le porte-coquille 9, elle ne peut plus bouger axialement par rapport à celui-ci, mais peut uniquement glisser avec rotation autour de son axe sur le berceau 15.

Pour bloquer totalement la coquille sur le porte-coquille, on prévoit des moyens de fixation rapide au niveau de la face de joint 13 de la coquille et de la face de joint 18 du porte-coquille. A cet effet, on prévoit des logements respectifs 19 et 20 creusés dans les bords en regard des susdites faces de joint 13 et 18, respectivement. Les fonds des logements 19 de la coquille 7 constituent des portées plates sur lesquelles peuvent prendre appui des organes de blocage du porte-coquille 9. Ces organes de blocage peuvent être constituées de nombreuses manières connues de l'Homme de métier. Dans l'exemple montré à la figure 2, il s'agit de pattes saillantes 21 percées d'une lumière allongée 22 et retenues par une vis 23 fixée au fond du logement 20 correspondant de la face de joint 18 du porte-coquille 9 ; cet agencement offre l'avantage que la coquille est libérée dès que les pattes 21 sont débloquées et repoussées vers l'extérieur, sans qu'il soit nécessaire de démonter totalement les vis 23. Nonobstant cela, le blocage de la coquille sur le porte-coquille pourrait être obtenu également à l'aide de vis à tête large chevauchant les plats des logements 19, ou bien à l'aide de vis à tête excentrée et à visage rapide,...

On notera qu'en pratique les deux organes de blocage 21 situés du côté adjacent à l'axe de rotation 4, dans le cas d'un moule portefeuille, n'ont pas à être actionnés et peuvent alors constituer de simples butées (avec possibilité de réglage de la position de ces butées) sous lesquelles sont amenés les plats des logements 19 respectifs lorsque la coquille est introduite dans le porte-coquille en la faisant glisser avec rotation dans celui-ci. Du reste, compte tenu de la position de ces deux organes de blocage 21 situés au fond du moule ouvert, leur accès est difficile et leur démontage allongerait de façon inutile le processus de remplacement de la coquille 7.

Pour le reste, chaque porte-coquille 9 est agencé de la même manière qu'un demi-moule antérieur dont il reprend les éléments nécessaires au fonctionnement correct du dispositif de moulage, et notamment les moyens de fixation 10 sur le porte-moule correspondant 3, les doigts 24 (et les logements respectifs sur l'autre porte-coquille) de guidage pour la fermeture du moule, la face arrière équipée d'une chambre et d'un joint torique pour la compensation de pression (non représenté sur les dessins),... Il est donc possible de remplacer, dans une installation préexistante, les demi-moules monoblocs traditionnels par des demi-moules bi-éléments conformes à l'invention.

Comme il va de soi et comme il résulte déjà de ce qui précède, l'invention ne se limite nullement à ceux de ses modes d'application et de réalisation qui ont été plus particulièrement envisagés ; elle en embrasse au contraire toutes les variantes.

## Revendications

1. Dispositif pour fabriquer des récipients, notamment des bouteilles, en une matière thermoplastique par soufflage ou étirage-soufflage d'une préforme préalablement chauffée, ledit dispositif comportant au moins un moule (1) constitué de deux demi-moules (2) supportés par respectivement deux portes-moules (3) mobiles l'un par rapport à l'autre,
caractérisé en ce que chaque demi-moule (2) comprend un porte-coquille (9) supporté par le porte-moule (3) respectif et une coquille (7) munie d'une demi-empreinte (8) du récipient à obtenir et solidarisable de façon amovible à son porte-coquille (9) par des moyens de fixation rapide (19-23), la coquille (7) et le porte-coquille (9) étant conformés de façon complémentaire pour être en contact mutuel au moins partiel de conduction thermique tandis que les conduits et raccordements de circulation de fluides de refroidissement et/ou de chauffage (11, 12) sont prévus exclusivement dans le porte-coquille.

2. Dispositif selon la revendication 1, caractérisé en ce que les faces coopérantes (14, 15) de la coquille (7) et du porte-coquille (9) sont en contact total de conduction thermique.

3. Dispositif selon la revendication 1, caractérisé en ce que les faces coopérantes (14, 15) de la coquille (7) et du porte-coquille (9) sont en contact partiel de conduction thermique réservant des zones de limitation de la conduction thermique.

4. Dispositif selon l'une quelconque des revendications 1 à 3, caractérisé en ce que les faces coopérantes (14, 15) mutuellement en contact de la coquille (7) et du porte-coquille (9) sont sensiblement semi-cylindriques de révolution avec un axe sensiblement parallèle à l'axe de l'empreinte (8) du récipient à fabriquer.

5. Dispositif selon l'une quelconque des revendications 1 à 4, caractérisé en ce que les faces coopérantes (14, 15) mutuellement en contact de la coquille et du porte-coquille sont pourvues de moyens (16, 17) de positionnement mutuel axial.

6. Dispositif selon la revendication 5, caractérisé en ce que les moyens de positionnement mutuel axial comprennent un système de nervure(s) (16) et gorge(s) (17) coopérantes s'étendant circonférentiellement.

7. Dispositif selon l'une quelconque des revendications 1 à 6, caractérisé en ce que les moyens (19-23) de fixation rapide de la coquille (7) sur le porte-coquille (9) sont prévus sur leurs faces de joint respectives (13, 18).

8. Dispositif selon les revendications 4 et 7, caractérisé en ce que les moyens (19-23) de fixation rapide de la coquille et du porte-coquille sont situés sur leurs bords respectifs parallèles à l'axe de l'empreinte.

9. Dispositif selon la revendication 8, caractérisé en ce que les moyens (19-23) de fixation rapide comprennent, d'un côté, au moins une butée de positionnement de la face de joint de la coquille par rapport à la face de joint du porte-coquille et, de l'autre côté, des moyens de vissage rapide (23) sur la face de joint (18) du porte-coquille (9) avec surface de serrage (21) débordant sur la face de joint (19) de la coquille.

10. Dispositif selon la revendication 9, dans lequel les porte-moules sont articulés en rotation l'un par rapport à l'autre pour constituer un moule de type "portefeuille", caractérisé en ce qu'au moins une butée est située du côté de l'articulation (4) des porte-moules (3) et les moyens de vissage rapide sont situés du côté opposé.

11. Dispositif selon l'une quelconque des revendications précédentes, caractérisé en ce que le porte-coquille (9) est également pourvu d'organes (24) de guidage des demi-moules pour la fermeture du moule.

12. Dispositif selon l'une quelconque des revendications précédentes, caractérisé en ce que l'un au moins des porte-coquilles est équipé de moyens de compensation de pression propres à maintenir la fermeture étanche du moule au cours du soufflage.

13. Dispositif selon l'une quelconque des revendications précédentes, caractérisé en ce que les porte-coquilles (9) sont équipés d'un ensemble de conduits fluidiques, ce grâce à quoi il est possible de créer des circuits appropriés pour une fabrication donnée avec une empreinte donnée.

## Patentansprüche

1. Vorrichtung zur Herstellung von Behältern, insbesondere Flaschen, aus einem Thermoplast durch Blasformen oder Streckblasformen aus einem zuvor erwärmten Vorformling, wobei die Vorrichtung wenigstens eine Form (1) umfaßt, die von zwei Halbformen (2) gebildet wird, die wiederum von zwei zueinander beweglichen Formträgern (3) getragen werden, dadurch gekennzeichnet, daß jede Halbform (2) einen von dem jeweiligen Formträger getragenen Kokillenhalter (9) und eine Kokille (7) umfaßt, die mit einem Halbabdruck (8) des zu erzeugenden Behälters versehen ist und über Schnellbefestigungsmittel (19 - 23) lösbar mit dem zugehörigen Kokillenhalter (9) verbindbar ist, wobei die Kokille (7) und der Kokillenhalter (9) komplementär ausgebildet sind, um miteinander wenigstens teilweise wärmeleitend in Berührung zu stehen, während die Leitungen und Verbindungen für den Umlauf von flüssigen Kühl- und/oder Heizmitteln (11, 12) ausschließlich in dem Kokillenhalter vorgesehen sind.

2. Vorrichtung nach Anspruch 1, dadurch gekennzeichnet, daß die zusammenwirkenden Flächen (14, 15) der Kokille (7) und des Kokillenhalters (9) miteinander vollständig wärmeleitend in Berührung stehen.

3. Vorrichtung nach Anspruch 1, dadurch gekennzeichnet, daß die zusammenwirkenden Flächen (14, 15) der Kokille (7) und des Kokillenhalters (9) miteinander teilweise wärmeleitend in Berührung stehen und Bereiche begrenzter Wärmeleitung aussparen.

4. Vorrichtung nach einem der Ansprüche 1 bis 3, dadurch gekennzeichnet, daß die zusammenwirkenden und miteinander in Berührung stehenden Flächen (14, 15) der Kokille (7) und des Kokillenhalters (9) im wesentlichen halb-zylindrisch und drehbar sind mit einer zu der Achse des Abdrucks (8) des herzustellenden Behälters im wesentlichen parallelen Achse.

5. Vorrichtung nach einem der Ansprüche 1 bis 4, dadurch gekennzeichnet, daß die zusammenwirkenden, miteinander in Berührung stehenden Flächen (14, 15) der Kokille und des Kokillenhalters mit Mitteln (16, 17) zur gegenseitigen axialen Positionierung versehen sind.

6. Vorrichtung nach Anspruch 5, dadurch gekennzeichnet, daß die Mittel zur gegenseitigen axialen Positionierung eine Anordnung von einer oder mehreren zusammenwirkenden Rippen (16) und Rillen (17) umfassen, die sich über den Umfang erstrecken.

7. Vorrichtung nach einem der Ansprüche 1 bis 6, dadurch gekennzeichnet, daß die Mittel (19 - 23) zur schnellen Befestigung der Kokille (7) an dem Kokillenhalter (9) an deren jeweiligen Verbindungsflächen (13, 18) vorgesehen sind.

8. Vorrichtung nach Anspruch 4 und 7, dadurch gekennzeichnet, daß die Schnellbefestigungsmittel (19 - 23) der Kokille und des Kokillenhalters an deren jeweiligen zur Achse des Abdrucks parallelen Rändern angeordnet sind.

9. Vorrichtung nach Anspruch 8, dadurch gekennzeichnet, daß die Schnellbefestigungsmittel (19 - 23) einerseits wenigstens einen Anschlag zur Positionierung der Verbindungsfläche der Kokille gegenüber der Verbindungsfläche des Kokillenhalters und andererseits Schnellverschraubungsmittel (23) an der Verbindungsfläche (18) des Kokillenhalters (9) mit einer über die Verbindungsfläche (19) der Kokille vorstehenden Klemmfläche (21) umfassen.

10. Vorrichtung nach Anspruch 9, wobei die Formträger zueinander drehbar angelenkt sind, um eine "wie eine Brieftasche" aufklappbare Form zu bilden, dadurch gekennzeichnet, daß wenigstens ein Anschlag auf der Anlenkungsseite (4) der Formträger (3) angeordnet ist und die Schnellverschraubungsmittel auf der gegenüberliegenden Seite angeordnet sind.

11. Vorrichtung nach einem der vorhergehenden Ansprüche, dadurch gekennzeichnet, daß der Kokillenhalter (9) zum Schließen der Form ebenfalls mit Mitteln (24) zur Führung der Halbformen versehen ist.

12. Vorrichtung nach einem der vorhergehenden Ansprüche, dadurch gekennzeichnet, daß wenigstens einer der Kokillenhalter mit Druckausgleichsmitteln versehen ist, die geeignet sind, den dichten Verschluß der Form während des Blasformens aufrechtzuerhalten.

13. Vorrichtung nach einem der vorhergehenden Ansprüche, dadurch gekennzeichnet, daß die Kokillenhalter (9) mit einer Anordnung von Fluidikleitungen versehen sind und es aufgrund dessen möglich ist, geeignete Kreisläufe für eine vorgegebene Herstellung mit einem vorgegebenen Abdruck zu bereitzustellen.

## Claims

1. Device for manufacturing containers, in particular bottles, made of a thermoplastic by blow molding or stretch-blow molding of a preheated preform, the said device including at least one mold (1) consisting of two half-molds (2) respectively supported by two mold carriers (3) which can move one with respect to the other,
characterized in that each half-mold (2) comprises a shell holder (9) supported by the respective mold carrier (3) and a shell (7) which is provided with a half-impression (8) of the container to be obtained and which can be removably fastened to its shell holder (9) by quick-fixing means (19-23), the shell (7) and the shell holder (9) being of complementary shapes in order to be in at least partial mutual thermal-conduction contact while the pipes and connections for the circulation of cooling and/or heating fluids (11, 12) are provided exclusively in the shell holder.

2. Device according to Claim 1, characterized in that the mating faces (14, 15) of the shell (7) and of the shell holder (9) are in total thermal-conduction contact.

3. Device according to Claim 1, characterized in that the mating faces (14, 15) of the shell (7) and of the shell holder (9) are in partial thermal-conduction contact by leaving regions of limited thermal conduction.

4. Device according to any one of Claims 1 to 3, characterized in that the mutually contacting mating faces (14, 15) of the shell (7) and of the shell holder (9) are approximately semicylindrical surfaces of revolution with an axis approximately parallel to the axis of the impression (8) of the container to be manufactured.

5. Device according to any one of Claims 1 to 4, characterized in that the mutually contacting mating faces (14, 15) of the shell and of the shell holder are provided with axial mutual-positioning means (16, 17).

6. Device according to Claim 5, characterized in that the axial mutual-positioning means comprise a system of one or more mating ribs (16) and grooves (17) extending circumferentially.

7. Device according to any one of Claims 1 to 6, characterized in that the means (19-23) for quickly fixing the shell (7) to the shell holder (9) are provided on their respective parting faces (13, 18).

8. Device according to Claims 4 and 7, characterized in that the means (19-23) for quickly fixing the shell and the shell holder are located on their respective edges parallel to the axis of the impression.

9. Device according to Claim 8, characterized in that the quick-fixing means (19-23) comprise, on one side, at least one stop for positioning the parting face of the shell with respect to the parting face of the shell holder and, on the other side, quick-screwing means (23) on the parting face (18) of the shell holder (9) with a clamping surface (21) projecting from the parting face (19) of the shell.

10. Device according to Claim 9, in which the mold carriers are rotationally pivoted with respect to each other in order to form a "jackknife"-type mold, characterized in that at least one stop is located on the pivot (4) side of the mold carriers (3) and the quick-screwing means are located on the opposite side.

11. Device according to any one of the preceding claims, characterized in that the shell holder (9) is also provided with members (24) for guiding the half-molds in order to close the mold.

12. Device according to any one of the preceding claims, characterized in that at least one of the shell holders is equipped with pressure-compensating means suitable for maintaining the sealed closure of the mold during blow molding.

13. Device according to any one of the preceding claims, characterized in that the shell holders (9) are equipped with a number of fluid pipes, by virtue of which it is possible to create suitable circuits for a given manufacture with a given impression.
